Europäisches Patentamt

European Patent Office

Office européen des brevets

(11) Numéro de publication: **0 012 043**
**B1**

(12) **FASCICULE DE BREVET EUROPEEN**

(45) Date de publication du fascicule du brevet: **25.05.83**

(51) Int. Cl.³: **B 62 D 5/08**

(21) Numéro de dépôt: **79400735.1**

(22) Date de dépôt: **11.10.79**

(54) **Dispositif de direction assistée hydraulique pour véhicule automobile.**

(30) Priorité: **27.10.78 FR 7830653**
**25.06.79 FR 7916315**

(43) Date de publication de la demande:
**11.06.80 Bulletin 80/12**

(45) Mention de la délivrance du brevet:
**25.05.83 Bulletin 83/21**

(84) Etats contractants désignés:
**DE GB IT SE**

(56) Documents cités:
**FR - A - 2 099 895**
**FR - A - 2 280 538**
**FR - A - 2 382 361**
**GB - A - 997 065**

(73) Titulaire: **SOCIETE ANONYME D.B.A.**
**Centre Paris Pleyel**
**F-93521 St Denis Cédex 01 (FR)**

(72) Inventeur: **Kervagoret, Gilbert**
**5 Impasse Nobleterre**
**F-95100 Argenteuil (FR)**

(74) Mandataire: **Le Moenner, Gabriel et al,**
**SERVICE BREVETS BENDIX 44, Rue François 1er**
**F-75008 Paris (FR)**

Courier Press, Leamington Spa, England.

Dispositif de direction assistée hydraulique pour véhicule automobile

L'invention concerne un dispositif de direction assistée hydraulique du type à distributeur rotatif pour véhicule automobile.

On connaît, par le brevet britannique GB—A—985 230, un dispositif de direction assistée hydraulique pour véhicule automobile, comprenant un organe de commande de direction se prolongeant par une chemise de distribution, un rotor de forme générale tubulaire disposé à l'intérieur de la chemise, une barre de torsion logée à l'intérieur du rotor et ayant une extrémité fixée au rotor et l'autre extrémité fixée à l'organe de commande de direction et un circuit hydraulique pour générer une grandeur de commande en réponse à un déplacement angulaire imposé au rotor, le rotor portant des rainures longitudinales dont les bords dirigés selon l'axe ont un profil non rectiligne. On connaît, par ailleurs, un brevet français FR—A—2 099 895 qui divulgue un dispositif de servo-direction dans lequel le circuit hydraulique comprend des paires d'orifices diamétralement opposés et décalés angulairement formés dans la chemise de distribution, et des paires de rainures axiales formées dans la périphérie du rotor, les rainures pouvant chacune entrer en communication avec deux orifices appartenant à deux paires d'orifices différentes, une source de haute pression et une vidange étant reliées en permanence respectivement à une paire de rainures, l'agencement étant tel qu'un déplacement angulaire $\theta$ du rotor provoque un déséquilibre $\Delta p$ entre les pressions respectives régnant dans les paires d'orifices. Dans ce document, toutefois, les rainures du rotor coopèrent avec trois pairs d'orifices décalés angulairement dans un même plan radial, cet agencement nécessitant de réaliser la chemise en deux parties tubulaires coaxiales emmanchées à force.

L'invention vise un dispositif du type ci-dessus, dans lequel l'adaptation du circuit hydraulique à une loi de variation donnée de la grandeur de commande ne soulève pas de difficultés, et dans lequel les éléments du circuit hydraulique peuvent être réalisés de façon simple.

Pour ce faire, selon une caractéristique de l'invention, le nombre de paires d'orifices ainsi que celui de paires de rainures est de deux, les paires d'orifices étant décalées axialement, les bords dirigés suivant l'axe de la chemise des orifices et/ou de rainures ayant un profil non rectiligne défini en fonction de la caractéristique $\Delta p = f(\theta)$ désirée.

Egalement pour ce faire, et selon une autre caractéristique de l'invention, dans un dispositif de direction assistée hydraulique, du type conforme à FR—A—2 099 895, comprenant un organe de commande de direction se prolongeant par une chemise de distribution, un rotor de forme générale tubulaire disposé à l'intérieur de la chemise, une barre de torsion logée à l'intérieur du rotor et ayant une extrémité fixée au rotor et l'autre extrémité fixée à l'organe de commande de direction, et un circuit hydraulique pour générer une grandeur de commande en réponse à un déplacement angulaire imposé au rotor, comprenant des paires d'orifices diamétralement opposés et décalés angulairement formés dans la chemise de distribution, et des paires de rainures axiales formées dans la périphérie du rotor, les rainures pouvant chacune entrer en communication avec deux orifices appartenant à deux paires d'orifices différentes, le dispositif selon l'invention se caractérise en ce que le nombre de paires d'orifices ainsi que celui de paires de rainures est de deux, les paires d'orifices étant décalées axialement, une source de haute pression et une vidange étant reliées en permanence respectivement à une paire d'orifices, un déplacement angulaire $\theta$ du rotor provoquant un déséquilibre $\Delta p$ des pressions respectives régnant dans les paires de rainures, les bords dirigés suivant l'axe de la chemise des orifices et/ou des rainures ayant un profil non rectiligne défini en fonction de la caractéristique $\Delta p = f(\theta)$ désirée.

Dans une forme de réalisation particulière permettant une réduction très sensible des bruits d'écoulement dûs à des phénomènes de cavitation, l'espace compris entre la barre de torsion et le rotor communique avec la vidange et, pour relier l'une des paires de rainures audit espace, il est prévu, pour chaque rainure, des moyens de distribution pour mettre en communication la rainure et ledit espace, agencés pour générer une contre-pression dans la rainure en cas de déplacement angulaire du rotor.

La création, lors d'un braquage, d'une contre-pression dans les rainures reliées à la vidange aboutit ainsi à réduire très fortement les cavitations dans ces rainures et donc les bruits d'écoulement;

D'autres caractéristiques particulières de l'invention apparaissent dans des revendications dépendantes.

On va maintenant décrire des exemples de réalisation du dispositif selon l'invention en se référant aux dessins annexés, dans lesquels:

— la figure 1 représente un dispositif de direction assistée selon une première forme de réalisation de l'invention représentée suivant deux demi-coupes longitudinales perpendiculaires entre elles, les plans de ces demi-coupes se coupant le long de l'axe du rotor;

— la figure 2 est une vue coupe suivant le plan II—II de la figure 1;

— la figure 3 est une vue en coupe suivant le plan III—III de la figure 1;

— la figure 4 est une vue en coupe suivant le plan IV—IV de la figure 1;

— la figure 5 est une vue en coupe suivant le plan V—V de la figure 1;

— la figure 6 est une vue en coupe suivant le plan VI—VI de la figure 1;

— la figure 7 est une vue de détail à plus grande échelle d'une partie du dispositif;

— la figure 8 est une vue en coupe longitudinale d'un dispositif de direction assistée selon une seconde forme de réalisation;

— la figure 9 est une vue en coupe transversale suivant le plan IX—IX de la figure 8;

— la figure 10 est une vue en coupe transversale suivant le plan X—X de la figure 8;

— la figure 11 est une vue en coupe transversale suivant le plan XI—XI de la figure 8;

— la figure 12 est une vue en coupe transversale suivant le plan XII—XII de la figure 8.

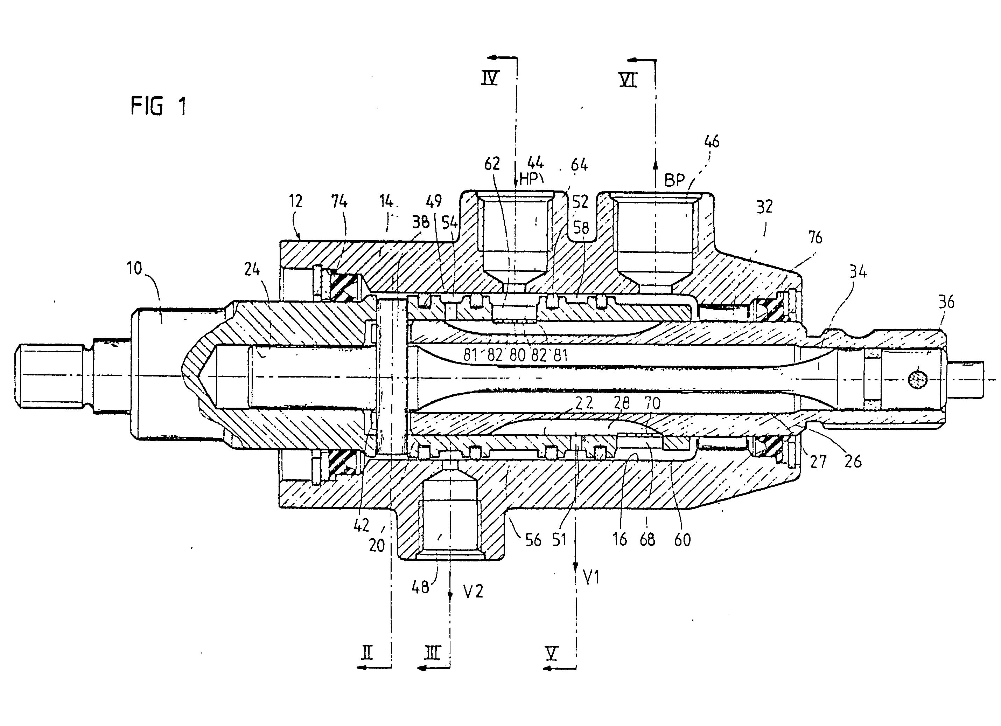

En se référant à la figure 1, on a désigné par la référence numérique 10 un organe de commande de direction constitué, dans l'exemple de réalisation décrit, par le pignon d'une direction à pignon et crémaillère, et par la référence 12 un distributeur rotatif pour dispositif de direction assistée hydraulique.

Le distributeur rotatif comprend un boîtier 14 dans lequel est formé un alésage 16. Dans l'alésage 16 est monté un prolongement 20 du pignon 10. Ce prolongement 20 est muni d'un alésage 22 coaxial à l'alésage 16 est constitue la chemise de distribution.

Dans l'alésage 22 est monté rotatif un rotor 26 comportant lui-même un alésage traversant 27. Dans l'alésage 27 est montée une barre de torsion 34 dont l'extrémité extérieure (à droite sur la figure 1) est fixée au rotor 26 par une goupille 36. A son extrémité située à l'intérieur (à gauche sur la figure 1), la barre de torsion 34 pénètre dans un alésage borgne 24 ménagé dans le pignon 10 à la suite de l'alésage 22 et de plus petit diamètre, et une goupille 38 fixe l'extrémité intérieure de la barre de torsion 34 au pignon 10. Le rotor 26 se trouve ainsi relié élastiquement au pignon 10.

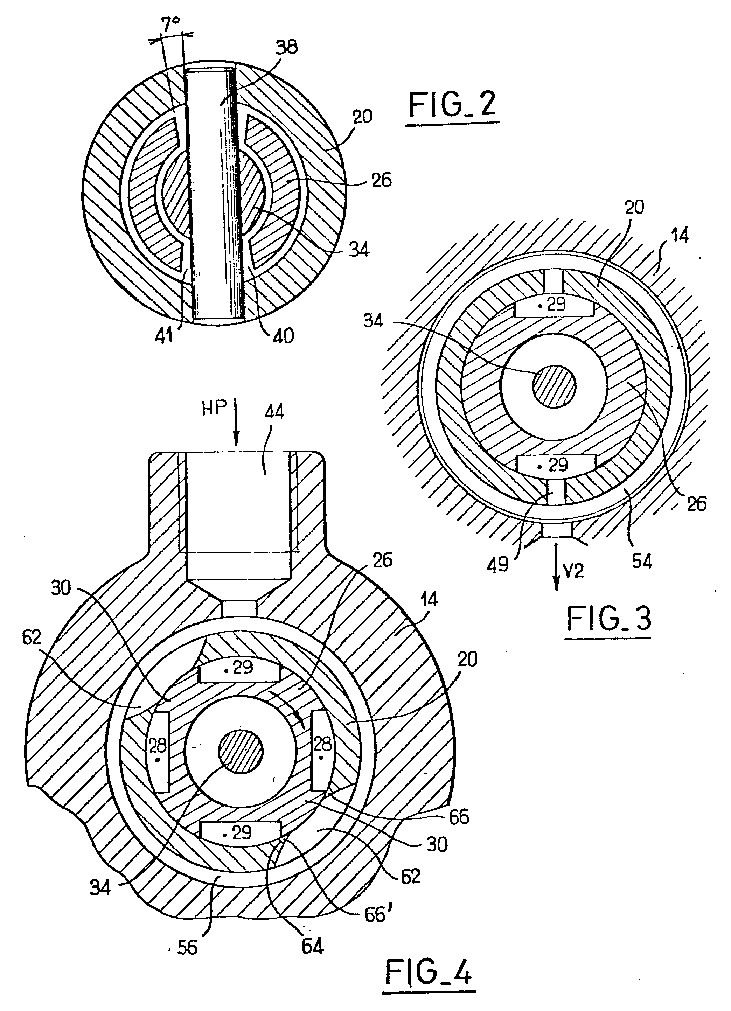

Une butée mécanique est prévue pour solidariser le rotor 26 au pignon 10 en cas de défaillance du circuit hydraulique, grâce à l'agencement représenté à la figure 2. Le rotor 26 se prolonge en effet jusqu'à la goupille 38, celle-ci passant à travers un embrèvement 42 ménagé dans le rotor avec un jeu 40, qui correspond à un déplacement angulaire déterminé entre le pignon 10 et le rotor 26.

Cet agencement présente également l'avantage d'autoriser une tolérance plus large entre le pignon 10 et la barre de torsion 34, celle-ci étant maintenue à la fois par le pignon et par le rotor 26.

En outre un palier 32, constitué par un roulement à aiguilles dans l'exemple représenté, est monté entre le boîtier 14 et le rotor 26 pour supporter en rotation ce dernier. Il faut cependant souligner que ce palier n'est pas toujours indispensable et pourrait dans certains cas être supprimé car, compte tenu de la réalisation monobloc du pignon 10 et de la chemise 20, cette dernière joue le rôle d'un palier pour le rotor 26.

De plus, le boîtier 14 comporte, d'une part, un orifice haute pression 44 et un orifice basse pression 46 reliés, respectivement, en service, à une pompe à débit constant et à un réservoir et, d'autre part, deux orifices, dont un seul est représenté sur le dessin, avec la référence 48, reliés en service aux compartiments respectifs $V_1$ et $V_2$ d'un vérin d'assistance non représenté ici, et qui communiquent respectivement avec des conduits 49 et 51 formés dans la chemise 20.

La chemise de distributeur 20 définit avec le boîtier 14 quatre chambres annulaires 54, 56, 58, 60, et des joints 52 montés sur la chemise assurent l'étanchéité entre les chambres adjacentes. La chambre 54 est reliée au compartiment $V_2$ du vérin et aux rainures 29 via le conduit 49; la chambre 56 est reliée à la source de pression via l'orifice 44; la chambre 58 est reliée au compartiment $V_1$ et aux rainures 28 via le conduit 51, la chambre 60 est reliée au réservoir via l'orifice 46.

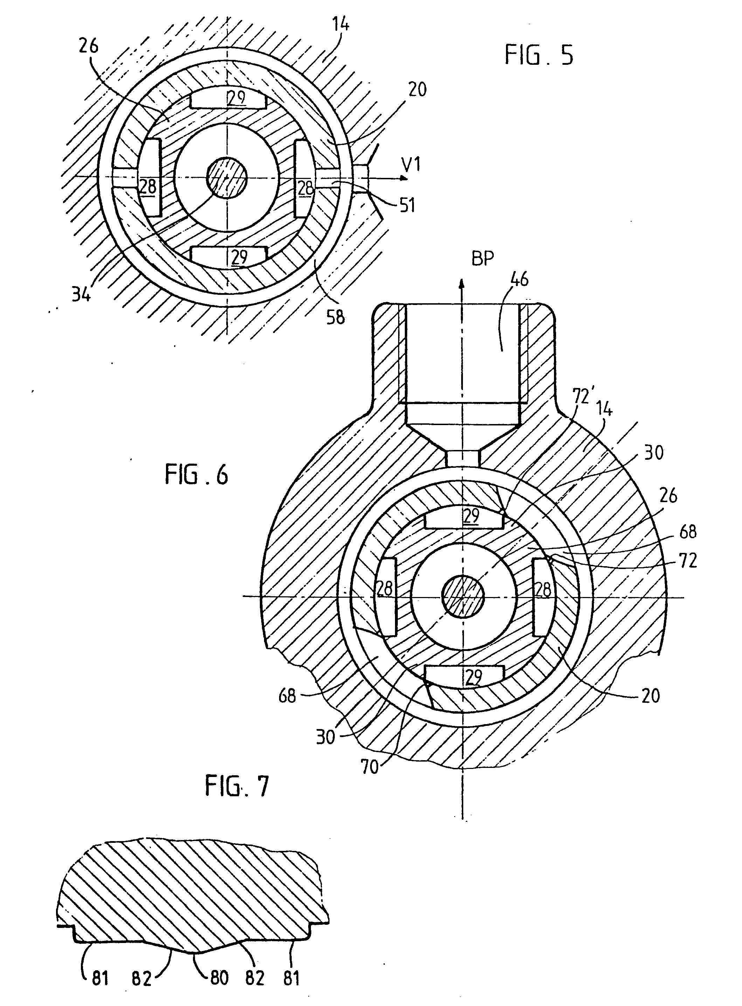

La chemise de distributeur 20 comporte, en outre, au niveau de la chambre annulaire 56, deux orifices 62 diamétralement opposés, comme le montre la figure 4, et de section rectangulaire, et au niveau de la chambre 60, deux autres orifices 68 (voir figure 6) diamétralement opposés, de forme identique, mais décalés de 90° par rapport aux orifices 62.

Enfin, le rotor 26 présente sur sa périphérie quatre rainures équidistantes, réparties en deux paires de rainures diamétralement opposées 28, 29, comme le montre en particulier la figure 4. Ces rainures définissent par conséquent quatre portées angulaires 30.

Les bords 64 des orifices 62 qui sont dirigés suivant l'axe de la chemise 20 définissent avec les portées angulaires 30 des section de passage 66, 66' pour le fluide hydraulique, et les bords 64 présentent un profil conçu de manière à fournir la caractéristique de valve requise.

On a représenté à la figure 7 un exemple d'un tel profil, qui comprend un tronçon avancé 80 et deux tronçons en retrait 81 parallèles à l'axe de la chemise, et des tronçons de raccordement 82 inclinés par rapport à cet axe. Il est clair qu'en modifiant les caractéristiques du profil, on modifie la manière dont varient les sections de passage en fonction du déplacement angulaire entre le rotor 26 et la chemise 20, et par conséquent la caractéristique de valve du dispositif.

De même, les bords 70 des orifices 68 qui sont dirigés suivant l'axe de la chemise définissent avec les portes 30 des sections de passage 72, 72' pour le fluide hydraulique, et présentent un profil identique.

On notera également que l'étanchéité du circuit hydraulique vis-à-vis de l'extérieur est assurée par des joints 74 et 76 montés dans des alésages étagés de forme appropriée formés aux deux extrémités de l'alésage 16 du boîtier 14 et maintenus par des circlips.

Le fonctionnement du distributeur décrit ci-dessus est le suivant.

Dans la position de repos représentée à la figure 1, les passages 66, 66' et 72, 72' ont la même section. La même pression règne dans les rainures 28 et 29, cette pression étant sensiblement égale à la moitié de la pression fournie par la pompe et arrivant par l'orifice 44.

Lorsqu'un couple de braquage à droite est appliqué, cela se traduit par un mouvement de rotation du rotor 26 dans le sens des aiguilles d'une montre, mais la chemise 20 ne tourne pas, étant donné l'élasticité en torsion de la barre 34.

Ce déplacement relatif entre la chemise 20 et le rotor 26 a pour effet d'augmenter la section des passages 66 débouchant dans les rainures 28 (figure 4) et de réduire au contraire la section des passages 72 débouchant dans les rainures 28 (figure 6).

L'effet est inverse pour les passages 66' débouchant dans les rainures 29, dont la section diminue, tandis que la section des passages 72' débouchant dans les rainures 29 augmente.

Il en résulte que la pression augmente dans les rainures 28, en communication avec le compartiment $V_1$ via les conduits 51 et qu'elle diminue dans les rainures 29 en communication avec le compartiment $V_2$ via les conduits 49.

La différence de pression qui s'établit ainsi entre les compartiments $V_1$ et $V_2$ du vérin d'assistance est fonction du couple de braquage appliqué et aussi, comme on l'a dit, du profilé choisi pour les bords 64 et 70.

Dans le cas d'un braquage à gauche, c'est l'inverse qui se produit, c'est-à-dire que c'est la pression dans le compartiment $V_1$ qui diminue et la pression du compartiment $V_2$ qui augmente, et cela aboutit à un déplacement en sens inverse de l'organe mobile du vérin.

Il faut souligner que les éléments de circuit hydraulique décrits ci-dessus sont beaucoup plus simples à réaliser que dans les dispositifs de l'état de la technique. En particulier, les rainures 28 et 29 du rotor peuvent être usinées par fraisage avec les tolérances courantes, et les orifices 62 et 68 formés dans la chemise 20 peuvent être obtenus par un brochage ou un fraisage pour l'ébauche, suivi d'une finition réalisée par électro-érosion ou par poinçonnage.

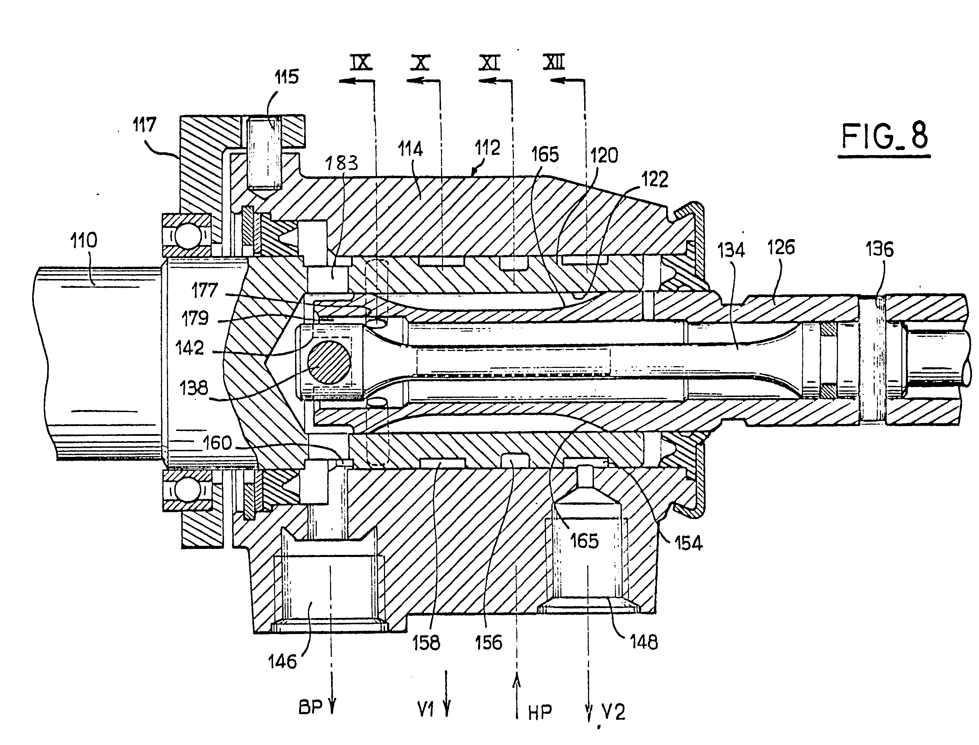

On se réfère ensuite à la figure 8 qui représente une variante de réalisation avantageuse de l'invention.

Sur la figure 8, les éléments, ayant des homologues dans l'appareil de la figure 1, portent la même référence, augmentée de 100. Ainsi l'organe de commande de direction est repéré 110, le distributeur rotatif 112, le corps du distributeur 114, le prolongement du pignon 120, l'alésage formé dans ce prolongement 122, le rotor 126, la barre de torsion 134, la goupille fixant le rotor à l'extrémité correspondante de la barre de torsion 136 et la goupille fixant l'autre extrémité de la barre de torsion au pignon 110 est repérée 138.

Le corps 114 du distributeur est relié par une goupille 115 à une embase 117 fixée au carter de crémaillère, non représenté.

La goupille 138 traverse avec jeu un embrèvement 142 formé dans l'extrémité du rotor 126, si bien que le pignon 110 est rendu solidaire en rotation du rotor 126 au-delà d'un certain déplacement angulaire, ce qui permet de suppléer à une éventuelle défaillance du circuit hydraulique.

La chemise de distribution 120 comporte quatre chambres annulaires 154, 156, 158, 160 entre lesquelles l'étanchéité est obtenue par un usinage très précis des portées en contact avec le corps 114.

La chambre 154 est reliée à l'un des compartiments $V_2$ d'un vérin d'assistance via un orifice 148 formé dans le corps 114. La chambre 156 est reliée à une source de pression telle qu'une pompe à débit constant (flèche HP) via un orifice non visible sur la figure 8. La chambre 158 est reliée à l'autre compartiment $V_1$ du vérin d'assistance via un orifice non représenté. Enfin, la chambre 160 est reliée à une bâche (flèche BP) par un orifice 146.

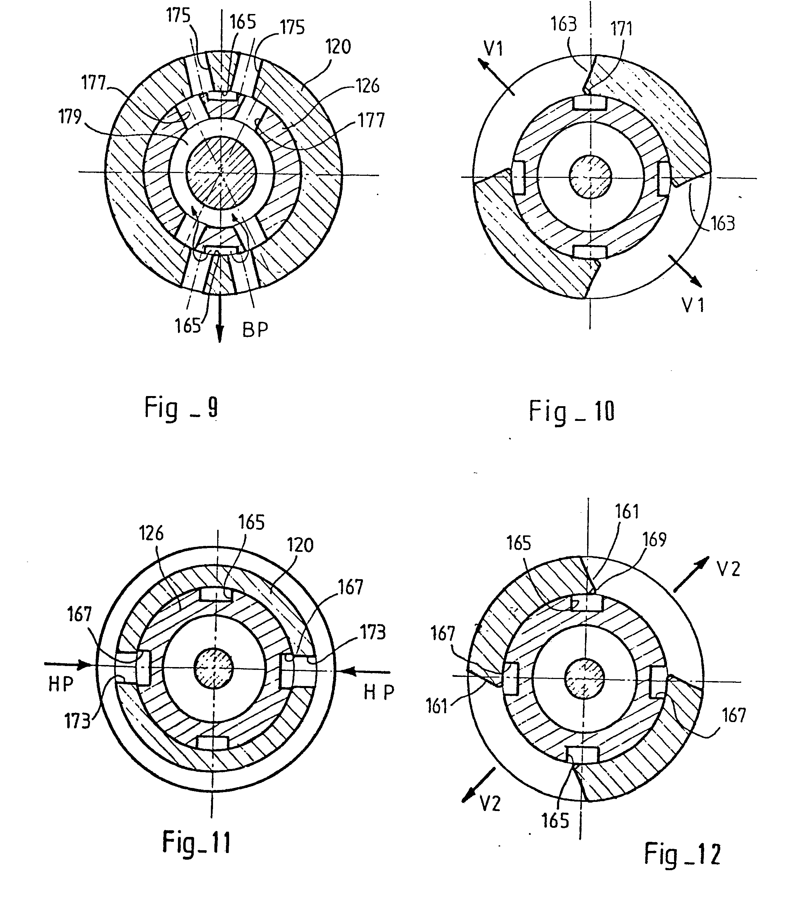

La chemise de distribution comporte en outre, au niveau de la chambre 154 reliée au compartiment $V_2$, deux orifices 161 diamétralement opposés et de section rectangulaire, comme le montre la figure 12, et au niveau de la chambre 158 reliée au compartiment $V_1$, deux orifices 163 de forme identique, mais décalés de 90° par rapport aux orifices 161.

Le rotor 126 comporte d'autre part sur sa périphérie extérieure quatre rainures longitudinales équidistantes 165, 167, comme le montrent les figures 10 à 12.

Les bords 169 des orifices 161 qui sont dirigés suivant l'axe de la chemise 120 présentent un profil non rectiligne, tel que décrit plus haut en référence à la figure 7. Les bords 171 des orifices 163 présentent un profil identique.

Les rainures 167 sont reliées en permanence à la source haute pression via des conduits radiaux 173 ménagés dans le chemise 120.

Les rainures 165 sont reliées en permanence à la bâche BP de la façon suivante. Pour chacune des rainures, deux conduits radiaux 175 sont ménagés dans la chemise 120, de manière symétrique par rapport à la rainure si l'on considère la position de repos du dispositif. Ces conduits communiquent avec la rainure.

Deux autres conduits 177 sont ménagés dans le rotor 126 de part et d'autre de la rainure 165 de façon à communiquer respectivement avec les conduits 175. Ces conduits 177 débouchent dans l'espace 179 défini entre le rotor 126 et la barre de torsion 134. Le trajet suivi par le liquide hydraulique est indiqué par des flèches à la figure 9.

L'espace 179 communique enfin avec la chambre annulaire 160 par des perçages 183.

Le dispositif de la figure 8 fonctionne de la même manière que celui de la figure 1.

Lorsqu'un couple de braquage est appliqué par exemple à droite, le rotor 126 tourne dans le sens des aiguilles d'une montre (sur les figures 9—12), mais la chemise 120 ne tourne pas, étant donné l'élasticité en torsion de la barre 134.

Ce déplacement relatif entre le rotor 126 et la chemise 120 a pour effet d'augmenter la section de passage entre les rainures 167 et les orifices 163 (figure 10) et de réduire la section de passage entre les rainures 167 et les orifices 161 (figure 12).

L'effet est inverse pour les sections de passage entre les rainures 165, d'une part, les orifices 161 et 163, d'autre part.

Les rainures 167 étant reliées à la haute pression, la pression augmente dans les orifices 163 en communication avec le compartiment $V_1$ et diminue dans les orifices 161 reliés au compartiment $V_2$. La différence de pression qui en résulte entre les compartiments $V_1$ et $V_2$ détermine l'effort fourni par le vérin d'assistance.

Le dispositif de distribution composé des paires de conduits 175, 177, qui relie les rainures 165 à la bâche, agit pour créer une contre-pression à l'intérieur des rainures 165, de manière à réduire les phénomènes de cavitation. En effet, ce dispositif fonctionne comme un pont de Wheatstone hydraulique, et tout déplacement angulaire du rotor 126 lors d'un braquage provoque une augmentation de la pression dans les rainures 165.

On parvient ainsi à supprimer pratiquement les bruits d'écoulement pour des pressions dans le compartiment de vérin de 5 à 7 bars, correspondant aux angles de braquage faible de la conduite normale d'un véhicule. Les bruits ne deviennent audibles que lors des manoeuvres pour lesquelles on effectue des braquages importants, la pression atteignant alors 30 bars.

**Revendications**

1. Dispositif de direction assistée hydraulique pour véhicule automobile, comprenant un organe de commande de direction (110) se prolongeant par une chemise de distribution (120), un rotor (126) de forme générale tubulaire disposé à l'intérieur de la chemise, une barre de torsion (134) logée à l'intérieur du rotor et ayant une extrémité fixée au rotor et l'autre extrémité fixée à l'organe de commande de direction, et un circuit hydraulique pour générer une grandeur de commande en réponse à un déplacement angulaire imposé au rotor, comprenant des pairs d'orifices (161, 163) diamétralement opposés et décalés angulairement formés dans la chemise de distribution, et des paires de rainures axiales (165, 167) formées dans la périphérie du rotor, les rainures pouvant chacune entrer en communication avec deux orifices appartenant à deux paires d'orifices différentes, une source de haute pression et une vidange étant reliées en permanence respectivement à une paire de rainures (167, 165), l'agencement étant tel qu'un déplacement angulaire $\theta$ du rotor provoque un déséquilibre $\Delta p$ entre les pressions respectives régnant dans les paires d'orifices (161, 163), caractérisé en ce que le nombre de paires d'orifices (161, 163) ainsi que celui de paires de rainures (165, 167) est de deux, les paires d'orifices étant décalées axialement, les bords dirigés suivant l'axe de la chemise des orifices (161, 163) et/ou des rainures ayant un profil non rectiligne défini en fonction de la caractéristique $\Delta p = f(\theta)$ désirée.

2. Dispositif de direction assistée hydraulique pour véhicule automobile, comprenant un organe de commande de direction (10) se prolongeant par une chemise de distribution (20), un rotor (26) de forme générale tubulaire disposé à l'intérieur de la chemise, une barre de torsion (34) logée à l'intérieur du rotor et ayant une extrémité fixée au rotor et l'autre extrémité fixée à l'organe de commande de direction, et un circuit hydraulique pour générer une grandeur de commande en réponse à un déplacement angulaire imposé au rotor, comprenant des paires d'orifices (62, 68) diamétralement opposés et décalés angulairement formés dans la chemise de distribution, et des paires de rainures axiales (28, 29) formées dans la périphérie du rotor, les rainures pouvant chacune entrer en communication avec deux orifices appartenant à deux paires d'orifices différentes, caractérisé en ce que le nombre de paires d'orifices (62, 68) ainsi que celui de paires de rainures (28, 29) est de deux, les paires d'orifices étant décalées axialement, une source de haute pression et une vidange étant reliées en permanence respectivement à une paire d'orifices, un déplacement angulaire $\theta$ du rotor provoquant un déséquilibre $\Delta p$ des pressions respectives régnant dans les paires de rainures, les bords dirigés suivant l'axe de la chemise des orifices (62, 68) et/ou des rainures (28, 29) ayant un profil non rectiligne défini en fonction de la caractéristique $\Delta p = f(\theta)$ désirée.

3. Dispositif selon la revendication 1 ou la revendication 2, caractérisé en ce que les orifices (62, 68; 161, 163) de chaque paire débouchent dans un passage annulaire (56, 60; 156, 160) à la périphérie de la chemise.

4. Dispositif selon l'une des revendications 1 à 3, caractérisé par le fait que les bords des orifices ont l'allure d'un coin tronqué (figure 7).

5. Dispositif selon la revendication 4, caractérisé en ce que la partie avancée en coin (80) est raccordée à des tronçons en retrait (81) par des parties inclinées (82).

6. Dispositif selon l'une des revendication 1, et 3 à 5, dans leurs rattachements à la revendication 1, caractérisé en ce que l'espace (179) compris entre la barre de torsion (134) et le rotor (126) communique avec la vidange et en ce que, pour relier l'une des paires de rainures (165) audit espace (179), il est prévu, pour chaque rainure, des moyens de distribution (175, 177) pour mettre en communication la rainure et ledit espace, agencés pour générer une contre-pression dans la rainure en cas de déplacement angulaire du rotor (126).

7. Dispositif selon la revendication 6, caractérisé en ce que les moyens de distribution comprennent une première paire de conduits (177) formés sensiblement radialement dans le rotor (126) symétriquement par rapport à la rainure (165) et reliant ledit espace à la périphérie du rotor, et une seconde paire de conduits (175) ménagés sensiblement radialement dans la chemise de distribution (120), de façon symétrique par rapport à la rainure (165) dans la position de repos du rotor, ces derniers conduits mettant en communication respectivement les conduits (177) de la première paire à la rainure (165).

8. Dispositif selon l'une des revendications précédentes, caractérisé en ce que la liaison entre l'organe de commande de direction (10; 110) et l'extrémité de la barre de torsion (34, 134) est réalisée au moyen d'une goupille diamétrale (38; 138) qui traverse un embrèvement (42; 142) formé avec jeu dans le rotor (26; 126), la goupille pouvant ainsi assurer la liaison mécanique entre le rotor et l'organe de commande de direction en cas de besoin.

**Patentansprüche**

1. Hydraulische Servolenkungseinrichtung für Kraftfahrzeuge, mit einem Lenksteuerorgan (110), das sich in einer Verteilerhülse (120) fortsetzt, einem rohrförmigen Rotor (126), der im Inneren der Hülse angeordnet ist, einem Torsionsstab (134), der im Inneren des Rotors angeordnet ist und der mit einem Ende am Rotor und mit dem anderen Ende am Lenksteuerorgan befestigt ist, und einem Hydraulikkreis zum Erzeugen einer Steuergröße in Abhängigkeit von einer Winkelverstellung des Rotors, der diametral gegenüberliegende und in Umfangsrichtung versetzte, in der Verteilerhülse gebildete Paare von Öffnungen (161, 163) und im Rotorumfang gebildete Paare von axialen Nuten (165, 167) aufweist, wobei di Nuten mit zwei zu verschiedenen Öffnungspaaren gehörenden Öffnungen in Verbindung treten können und wobei eine Hochdruckquelle sowie ein Niederdruckbereich mit einem Nutenpaar (167, 165) dauernd verbunden sind, wobei die Anordnung so getroffen ist, daß eine Winkelverstellung ($\theta$) des Rotors ein Ungleichgewicht ($\Delta p$) zwischen den in den Öffnungspaaren (161, 163) herrschenden entsprechenden Drücken hervorruft, dadurch gekennzeichnet, daß die Anzahl der Öffnungspaare (161, 163) sowie die der Nutenpaare (165, 167) zwei ist, wobei die Öffnungspaare in axialer Richtung versetzt sind und wobei die in Richtung der Achse der Hülse verlaufenden Ränder der-Öffnungen (161, 163) und/oder der Nuten ein nicht geradliniges Profil haben, das in Abhängigkeit von der gewünschten Eigenschaft $\Delta p = f(\theta)$ definiert ist.

2. Hydraulische Servolenkungseinrichtung für Kraftfahrzeuge, mit einem Lenksteuerorgan (10), das sich in einer Verteilerhülse (20) fortsetzt, einem rohrförmigen Rotor (26), der im Inneren der Hülse angeordnet ist, einem Torsionsstab (34), der im Inneren des Rotors angeordnet ist und der mit einem Ende am Rotor und mit dem anderen Ende am Lenksteuerorgan befestigt ist, und einem Hydraulikkreis zum Erzeugen einer Steuergröße in Abhängigkeit von einer Winkelverstellung des Rotors, der diametral gegenüberliegende und in Umfangsrichtung versetzte, in der Verteilerhülse gebildete Paare von Öffnungen (62, 68) und im Rotorumfang gebildete Paare von axialen Nuten (28, 29) aufweist, wobei die Nuten mit zwei zu verschiedenen Öffnungspaaren gehörenden Öffnungen in Verbindung treten können, dadurch gekennzeichnet, daß die Anzahl der Öffnungspaare (62, 68) sowie die der Nutenpaare (28, 29) zwei ist, wobei die Öffnungspaare axial versetzt sind, daß eine Hochdruckquelle und ein Niederdruckbereich mit einem Öffnungspaar ständig verbunden sind, wobei eine Winkelverstellung $\theta$ des Rotors ein Ungleichgewicht $\Delta p$ der in den Nutenpaaren herrschenden entsprechenden Drücke hervorruft, und daß die in Richtung der Achse der Hülse verlaufenden Ränder der Öffnungen (62, 68) und/oder der Nuten (28, 29) ein nicht geradliniges Profil haben, das in Abhängigkeit von der gewünschten Eigenshaft $\Delta p = f(\theta)$ definiert ist.

3. Servolenkungseinrichtung nach Anspruch 1 oder 2, dadurch gekennzeichnet, daß die Öffnungen (62, 68; 161, 163) jedes Paares in einen Ringkanal (56, 60; 156, 160) am Umfang der Hülse münden.

4. Servolenkungseinrichtung nach einem der Ansprüche 1 bis 3, dadurch gekennzeichnet, daß die Ränder der Öffnungen die Form eines stumpfen Keils haben (Fig. 7).

5. Servolenkungseinrichtung nach Anspruch 4, dadurch gekennzeichnet, daß der keilig vorstehende Abschnitt (80) mit zurückversetzten Abschnitten (81) durch schräg verlaufende Abschnitte (82) verbunden ist.

6. Servolenkungseinrichtung nach einem der Ansprüche 1, und 3 bis 5 in Verbindung mit Anspruch 1, dadurch gekennzeichnet, daß der zwischen dem Torsionsstab (134) und dem Rotor (126) liegende Raum (179) mit dem Niederdruckbereich in Verbindung steht und daß zur Verbindung eines der Nutenpaare (165) mit diesem Raum (179) für jede Nut Verteilermittel (175, 177) vorgesehen sind, die die Nut mit diesem Raum in Verbindung setzen und die so ausgebildet sind, daß sie im Fall einer Winkelverstellung des Rotors (126) einen Gegendruck in der Nut erzeugen.

7. Servolenkungseinrichtung nach Anspruch 6, dadurch gekennzeichnet, daß die Verteilermittel ein erstes Leitungspaar (177) und ein zweites Leitungspaar (175) aufweisen, von denen das erste Leitungspaar im wesentlichen radial verlaufend im Rotor (126) symmetrisch zur Nut (165) gebildet ist und diesen Raum mit dem Umfang des Rotors verbindet und von denen das zweite Leitungspaar im wesentlichen radial verlaufend in der Verteilerhülse (120) gebildet ist, und zwar symmetrisch zu der Nut (165) in der Ruhelage des Rotors, wobei die letzteren Leitungen die Leitungen (177) des ersten Leitungspaars mit der Nut (165) in Verbindung setzen.

8. Servolenkungseinrichtung nach einem der vorhergehenden Ansprüche, dadurch gekennzeichnet, daß die Verbindung zwischen dem Lenksteuerorgan (10; 110) und dem Ende des Torsionsstabes (34; 134) mittels eines diametralen Stiftes (38; 138) erfolgt, der sich durch eine Ausnehmung (42; 142) im Rotor (26; 126) mit Spiel erstreckt, so daß der Stift im Notfall die mechanische Verbindung zwischen dem Rotor und dem Lenksteuerorgan sicherstellen kann.

## Claims

1. An hydraulic power-steering device for automotive vehicles, comprising a steering control member (110) prolonged by a distribution sleeve (120), a rotor (126) of generally tubular form disposed within the sleeve, a torsion rod (134) disposed in the interior of the rotor and having one end fixed to the rotor and the other end fixed to the steering control member, and an hydraulic circuit for generating a control value in response to an angular displacement imposed on the rotor, comprising pairs of orifices (161, 163) diametrically opposed and angularly offset, formed in the distribution sleeve, and pairs of axial grooves (165, 167) formed in the periphery of the rotor, the grooves each being adapted to communicate with two orifices belonging to two different pairs of orifices, a high-pressure source and a low-pressure region, respectively, being permanently connected to a pair of grooves (167, 165), the design being such that an angular displacement $\theta$ of the rotor results in a disbalance $\Delta p$ between the respective pressures prevailing in the pairs of orifices (161, 163), characterized in that the number of pairs of orifices (161, 163) as well as that of the pairs of grooves (165, 167) is two, the pairs of orifices being axially offset, the edges of the orifices (161, 163) and/or of the grooves that extend along the axis of the sleeve having a non-linear profile defined as a function of the desired characteristic $\Delta p = f(\theta)$.

2. An hydraulic power-steering device for automotive vehicles, comprising a steering control member (10) prolonged by a distribution sleeve (20), a rotor (26) of generally tubular form disposed within the sleeve, a torsion rod (34) disposed in the interior of the rotor and having one end fixed to the rotor and the other end fixed to the steering control member, and an hydraulic circuit for generating a control value in response to an angular displacement imposed on the rotor, comprising pairs of orifices (62, 68) diametrically opposed and angularly offset, formed in the distribution sleeve, and pairs of axial grooves (28, 29) formed in the periphery of the rotor, the grooves each being adapted to communicate with two orifices belonging to two different pairs of orifices, characterized in that the number of pairs of orifices (62, 68) as well as that of the pairs of grooves (28, 29) is two, the pairs of orifices being axially offset, a high-pressure source and a low-pressure region, respectively, being permanently connected to a pair of orifices, an angular displacement $\theta$ of the rotor resulting in a disbalance $\Delta p$ of the respective pressures prevailing in the pairs of grooves, the edges of the orifices (62, 68) and/or the grooves (28, 29) extending in the direction of the axis of the sleeve having a non-linear profile defined as a function of the desired characteristic $\Delta p = f(\theta)$.

3. The device of claim 1 or claim 2, characterized in that the orifices (62, 68; 161, 163) of each pair open into an annular passage (56, 60; 156, 160) at the periphery of the sleeve.

4. The device of any of claims 1 to 3, characterized in that the edges of the orifices are in the form of a truncated wedge (Fig. 7).

5. The device of claim 4, characterized in that the wedgingly projecting portion (80) is connected to recessed portions (81) by inclined portions (82).

6. The device of any of claims 1, and 3—5 as appended to claim 1, characterized in that the space (179) provided between the torsion rod (134) and the rotor (126) communicates with the low pressure region and in that, for connecting the one of pairs of grooves (165) to said space (179), there are provided for each groove distribution means (175, 177) for communicating the groove and said space, designed to generate a counter-pressure in the groove in case of an angular displacement of the rotor (126).

7. The device of claim 6, characterized in that the distribution means comprise a first pair of conduits (177) formed substantially radially in the rotor (126) symmetrically with respect to the groove (165) and connecting said space to the periphery of the rotor, and a second pair of conduits (175) formed substantially radially in the distribution sleeve (120), symmetrically with respect to the groove (165) in the rest position of the rotor, said latter conduits respectively communicating the conduits (177) of the first pair to the groove (165).

8. The device of any of the preceding claims, characterized in that the connection between the steering control member (10; 110) and the end of the torsion rod (34, 134) is comprised of a diametral pin (38; 138) traversing a recess (42, 142) formed in the rotor (26; 126) with play so that the pin is able to assure the mechanical connection between the rotor and the steering control member when required.

FIG 1

FIG_2

FIG_3

FIG_4

0 012 043

FIG . 5

FIG . 6

FIG . 7

FIG_8

0012043

Fig _ 9

Fig _ 10

Fig_11

Fig _12